(19) **Europäisches Patentamt European Patent Office Office européen des brevets**

(11) **EP 2 183 536 B1**

(12) **FASCICULE DE BREVET EUROPEEN**

(45) Date de publication et mention de la délivrance du brevet:
**23.10.2013 Bulletin 2013/43**

(21) Numéro de dépôt: **08806109.8**

(22) Date de dépôt: **27.06.2008**

(51) Int Cl.:
*F27B 13/14* (2006.01)      *F27D 21/04* (2006.01)
*F17D 3/01* (2006.01)      *F17D 5/00* (2006.01)
*F17D 5/02* (2006.01)

(86) Numéro de dépôt international:
**PCT/FR2008/051181**

(87) Numéro de publication internationale:
**WO 2009/007613 (15.01.2009 Gazette 2009/03)**

(54) **PROCEDE DE SURVEILLANCE D'UN CONDUIT DES FUMEES RELIANT UN FOUR DE CUISSON DE BLOCS CARBONES A UN CENTRE DE TRAITEMENT DES FUMEES**

**VERFAHREN ZUR ÜBERWACHUNG EINES RAUCHKANALS ZWISCHEN EINEM BRENNOFEN FÜR KOHLENSÄUREHALTIGE BLÖCKE UND EINEM RAUCHVERARBEITUNGSZENTRUM**

**METHOD FOR MONITORING A SMOKE DUCT CONNECTING A CARBONATED BLOCK BAKING FURNACE TO A SMOKE PROCESSING CENTRE**

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **29.06.2007 FR 0704709**

(43) Date de publication de la demande:
**12.05.2010 Bulletin 2010/19**

(73) Titulaires:
• **SOLIOS Environnement**
  **78100 Saint-Germain-en-Laye (FR)**
• **Solios Carbone**
  **69700 Givors (FR)**

(72) Inventeurs:
• **MAHIEU, Pierre**
  **F-69001 Lyon (FR)**
• **MALARD, Thierry**
  **F-95290 L'Isle-Adam (FR)**

(74) Mandataire: **Cabinet Plasseraud**
  **52, rue de la Victoire**
  **75440 Paris Cedex 09 (FR)**

(56) Documents cités:
**EP-A- 0 188 911      EP-A- 0 252 856**
**FR-A- 2 887 782      JP-A- 56 079 230**
**US-A- 4 270 898**

## Description

L'invention concerne le domaine de la cuisson des blocs carbonés destinés à l'électrométallurgie, et plus particulièrement la cuisson d'anodes et de cathodes en carbone, destinées à la production par électrolyse de l'aluminium, et l'invention se rapporte plus précisément à un procédé de surveillance de l'état d'un conduit des fumées reliant chaque rampe d'aspiration d'un four à cuire, ci-après dénommé FAC, desdits blocs carbonés, à un centre de traitement des fumées, ci-après dénommé CTF, destiné à épurer les fumées de cuisson provenant du FAC, qui est un four de cuisson du type « à feu tournant » et, de préférence, « à chambres ouvertes » ou « à chambres couvertes », dont les fumées de cuisson sont aspirées par au moins une rampe d'aspiration du FAC et collectées dans ledit conduit des fumées conduisant les fumées au CTF.

Le CTF est également d'un type bien connu, comportant une tour de refroidissement des fumées par pulvérisation d'eau dans lesdites fumées à la sortie dudit conduit, et au moins un réacteur de neutralisation physico-chimique des fumées par mise en contact des fumées avec un réactif pulvérulent, tel que de l'alumine, puis filtrage du réactif chargé, en particulier par adsorption de composés fluorés suite au contact avec les fumées, et filtration des poussières des fumées, et recyclage dans ledit réacteur d'au moins une fraction du réactif filtré et son mélange à du réactif frais.

On sait que les anodes et les cathodes utilisées pour l'électrolyse de l'aluminium sont des blocs de carbone nécessaires à la réaction chimique de l'électrolyse de l'alumine ($Al_2O_3$) pour obtenir l'aluminium ($Al$). Les matériaux de base entrant dans la fabrication de telles anodes ou cathodes sont le coke de pétrole calciné constituant les agrégats, et le brai de houille, utilisé comme liant liquide. Des blocs crus, tout d'abord réalisés par malaxage intensif des matériaux de base et compaction pour mise en forme de la pâte formée à partir de ces deux constituants principaux, sont ensuite cuits pendant une centaine d'heures à une température de l'ordre de 1100°C. Ce traitement thermique a pour effet de transformer le brai en coke et, par voie de conséquence, de conférer une tenue mécanique et une conductibilité électrique satisfaisantes aux anodes et cathodes pour leur exploitation en cuve d'électrolyse.

Ces blocs carbonés crus sont cuits dans des fours de cuisson d'un type bien connu, dénommé « four à chambres à feu (x) tournant (s) » ou encore « fours à feu (x) tournant (s) », qui sont utilisés de sorte à mettre en oeuvre le principe d'un échangeur thermique solide/gaz à contre-courant.

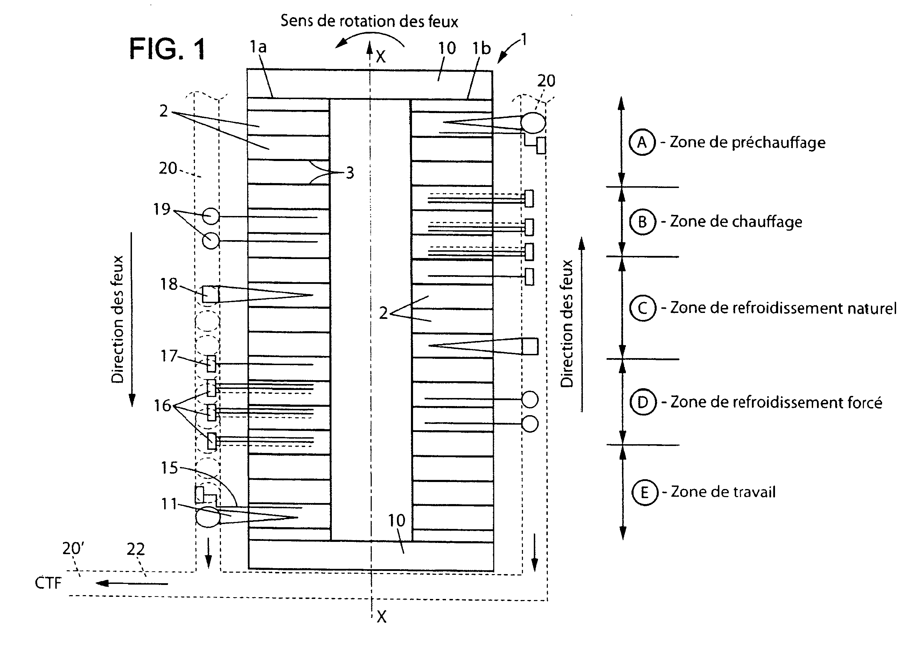

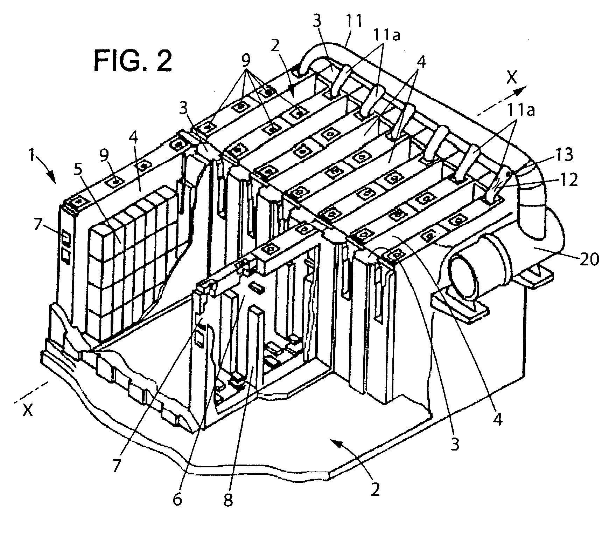

Des fours à cuire (FAC) des anodes sont décrits notamment dans les documents de brevets suivants : US 4 859 175, WO 91/19147, US 6 339 729, US 6 436 335 et CA 2 550 880, auxquels on se reportera pour davantage de précisions à leur sujet. On rappelle cependant leur structure et leur fonctionnement, en référence aux figures 1 et 2 ci-après, représentant respectivement une vue en plan schématisée de la structure d'un four à feu(x) tournant(s) et chambres ouvertes, à deux feux dans cet exemple pour la figure 1, et une vue partielle en perspective avec arrachement représentant la structure interne d'un tel four, pour la figure 2.

Le four à cuire (FAC) 1 comprend deux cuvelages ou travées 1 a et 1b parallèles, s'étendant selon l'axe longitudinal XX sur la longueur du four et comportant chacun(e) une succession de chambres 2 transversales (perpendiculaires à l'axe XX), séparées les unes des autres par des murs transversaux 3. Chaque chambre 2 est constituée, dans sa longueur, c'est-à-dire dans la direction transversale du four 1, par la juxtaposition, en alternance, d'alvéoles 4, ouverts à leur partie supérieure, pour permettre le chargement des blocs carbonés à cuire et le déchargement des blocs cuits refroidis, et dans lesquels sont empilés les blocs carbonés 5 à cuire noyés dans une poussière carbonée, et des cloisons chauffantes creuses 6, à parois minces. Les cloisons creuses 6 d'une chambre 2 sont dans le prolongement longitudinal (parallèle au grand axe XX du four 1) des cloisons creuses 6 des autres chambres 2 de la même travée 1a ou 1 b et les cloisons creuses 6 sont en communication les unes avec les autres par des lucarnes 7 à la partie supérieure de leurs parois longitudinales, en regard de passages longitudinaux ménagés à ce niveau dans les murs transversaux 3, de sorte que les cloisons creuses 6 forment des lignes de cloisons longitudinales, disposées parallèlement au grand axe XX du four et dans lesquelles vont circuler des fluides gazeux (air comburant, gaz combustibles et gaz et fumées de combustion) permettant d'assurer la préchauffe et la cuisson des anodes 5, puis leur refroidissement. Les cloisons creuses 6 comportent, en outre, un dispositif 8 pour allonger et répartir plus uniformément le trajet des gaz ou fumées de combustion et ces cloisons creuses 6 sont munies, à leur partie supérieure, d'ouvertures 9, dites « ouvreaux », obturables par des couvercles amovibles.

Les deux travées 1a et 1b du four 1 sont mises en communication à leurs extrémités longitudinales par des carneaux de virage 10, qui permettent de transférer les fluides gazeux d'une travée à l'autre, et, parfois même de l'extrémité d'un groupe de lignes de cloisons creuses 6 d'une travée 1a ou 1b à l'extrémité du groupe de lignes de cloisons creuses 6 correspondante sur l'autre travée 1 b ou 1a,.

Le principe d'exploitation des fours à feu (x) tournant (s), également dénommés fours « à avancement de feu (x) », consiste à amener un front de flammes à se déplacer d'une chambre 2 à une autre qui lui est adjacente au cours d'un cycle, chaque chambre 2 subissant successivement des stades de préchauffage, chauffage forcé, plein feu, puis refroidissement (naturel puis forcé).

La cuisson des anodes 5 est réalisée par un ou plusieurs feux ou groupes de feux, qui se déplacent cycliquement de chambre en chambre (dans le sens indiqué par les flèches) comme représenté sur la figure 1 (deux groupes de feux étant représentés). Chaque feu ou groupe de feux est composé de cinq zones successives A à E, qui sont, comme représenté sur la figure 1, et de l'aval vers l'amont par rapport au sens d'écoulement des fluides gazeux dans les lignes de cloisons creuses 6, et dans le sens contraire aux déplacements cycliques de chambre en chambre :

A) Une zone de préchauffage comportant, en se reportant au feu de la travée 1 a, et en tenant compte du sens de rotation des feux indiqué par la flèche au niveau du carneau de virage 10 à l'extrémité du four 1 en haut sur la figure 1 :

- une rampe d'aspiration 11 équipée, pour chaque cloison creuse 6 de la chambre 2 au-dessus de laquelle cette rampe d'aspiration s'étend, d'un système de mesure et de réglage du débit des gaz et fumées de combustion par ligne de cloisons creuses 6, ce système pouvant comprendre, dans chaque pipe d'aspiration 11a qui est solidaire de la rampe d'aspiration 11 et débouchant dans cette dernière, d'une part, et, d'autre part, engagée dans l'ouverture 9 de l'une respectivement des cloisons creuses 6 de cette chambre 2, un volet d'obturation réglable pivoté par un actionneur de volet, pour le réglage du débit, ainsi qu'un débitmètre 12, par exemple de type « à tube de Venturi » , et un capteur de température (thermocouple) 13 de mesure de la température des fumées de combustion à l'aspiration (le débitmètre 12 et le thermocouple 13 n'étant représentés que dans une pipe 11a sur la figure 2 par simplicité) ; et
- une rampe de mesure de pré-chauffage 15, située en amont de la rampe d'aspiration 11, généralement au dessus de la même chambre 2, et équipée de capteurs de température (thermocouples) et de capteurs de pression pour mesurer la dépression statique et la température régnant dans chacune des cloisons creuses 6 de cette chambre afin de pouvoir afficher et régler cette dépression et cette température de la zone de préchauffage;

B) Une zone de chauffage comportant :

- plusieurs rampes de chauffage identiques 16, deux ou, de préférence, trois, comme représenté sur la figure 1 ; chacune équipée d'injecteurs de combustible (liquide ou gazeux), éventuellement de brûleurs, et de capteurs de température (thermocouples), chacune des rampes 16 s'étendant au- dessus de l'une des chambres respectivement d'un nombre correspondant de chambres 2 adjacentes, de sorte que les injecteurs de chaque rampe de chauffage 16 sont engagés dans les ouvertures 9 des cloisons creuses 6 pour y injecter le combustible ;

C) Une zone de soufflage ou de refroidissement naturel comportant :

- une rampe dite de « point zéro » 17, s'étendant au-dessus de la chambre 2 immédiatement en amont de celle en-dessous de la rampe de chauffage 16 la plus en amont, et équipée de capteurs de pression pour mesurer la pression statique régnant dans chacune des cloisons creuses 6 de cette chambre 2, afin de pouvoir régler cette pression comme indiqué ci-après, et
- une rampe de soufflage 18, équipée de moto ventilateurs munis d'un dispositif permettant le réglage du débit d'air ambiant insufflé dans chacune des cloisons creuses 6 d'une chambre 2 en amont de celle située sous la rampe de point zéro 17, de sorte que les débits d'air ambiant insufflés dans ces cloisons creuses 6 peuvent être régulés de sorte à obtenir une pression voulue (légère surpression ou légère dépression) au niveau de la rampe de point zéro 17 ;

D) Une zone de refroidissement forcé, qui s'étend typiquement sur trois chambres 2 en amont de la rampe de soufflage 18, et qui comporte, dans cet exemple, deux rampes de refroidissement 19 parallèles, chacune équipée de moto ventilateurs et de pipes de soufflage insufflant de l'air ambiant dans les cloisons creuses 6 de la chambre 2 correspondante ; et
E) Une zone de travail, s'étendant en amont des rampes de refroidissement 19 et permettant l'enfournement et le défournement des anodes 5, et l'entretien des chambres 2.

Le chauffage du four 1 est ainsi assuré par les rampes de chauffage 16, dont les injecteurs sont introduits, via les ouvertures 9, dans les cloisons creuses 6 des chambres 2 concernées. En amont des rampes de chauffage 16 (par rapport au sens d'avancement du feu et au sens de circulation de l'air et des gaz et fumées de combustion dans les lignes de cloisons creuses 6), la rampe de soufflage 18 et la ou les rampe(s) de refroidissement 19 comportent des pipes d'insufflation d'air de refroidissement et de combustion alimentées par les moto ventilateurs, ces pipes étant connectées, via les ouvertures 9, aux cloisons creuses 6 des chambres 2 concernées. En aval des rampes de chauffage 16, on dispose de la rampe d'aspiration 11 pour extraire les gaz et fumées de combustion, désignés dans leur ensemble par les termes « fumées de combustion », qui circulent dans les lignes de cloisons creuses 6.
Le chauffage et la cuisson des anodes 5 sont assurés à la fois par la combustion du combustible (gazeux ou liquide) injecté, de manière contrôlée, par les rampes de chauffage 16, et, dans une mesure sensiblement égale, par la combustion de matières volatiles (telles que des hydrocarbures aromatiques polycycliques) du brai diffusées par les anodes 5 dans les alvéoles 4 des chambres 2 en zones de préchauffage et chauffage, ces matières volatiles, en grande partie combustible, diffusées dans les alvéoles 4 pouvant s'écouler dans les deux cloisons creuses 6 adjacentes par des interstices de dégazage ménagés dans ces cloisons pour s'enflammer dans ces deux cloisons, grâce à de l'air comburant résiduel présent, à ce niveau, parmi les fumées de combustion dans ces cloisons creuses 6.

Ainsi, la circulation de l'air et des fumées de combustion s'effectue le long des lignes de cloisons creuses 6, et une dépression imposée en aval de la zone de chauffage B par la rampe d'aspiration 11 à l'extrémité aval de la zone de préchauffage A, permet de contrôler le débit des fumées de combustion à l'intérieur des cloisons creuses 6, tandis qu'une partie de l'air provenant des zones de refroidissement C et D, grâce aux rampes de refroidissement 19 et l'air soufflé en provenance de la rampe de soufflage 18, est préchauffé dans les cloisons creuses 6, en refroidissant les anodes 5 cuites dans les alvéoles 4 adjacents, au cours de son trajet et sert de comburant lorsqu'il parvient dans la zone de chauffage B.

Au fur et à mesure que la cuisson des anodes 5 se produit, on fait avancer cycliquement (par exemple toutes les 24 heures environ) d'une chambre 2 l'ensemble des rampes 11 à 19 (excepté les deux rampes de chauffage 16 aval -avant déplacement- relativement au sens du feu puisque les 3 rampes 16 avancent « en chenille » la rampe 16 amont devenant la rampe aval des 3 rampes 16) et les équipements et appareillages de mesure et d'enregistrement associés, chaque chambre 2 assurant ainsi, successivement, en aval de la zone de préchauffage A, une fonction de chargement des blocs carbonés crus 5, puis, dans la zone de préchauffage A, une fonction de préchauffage naturel des blocs 5 par les fumées de combustion du combustible et des vapeurs de brai qui quittent les alvéoles 4 en pénétrant dans les cloisons creuses 6, compte tenu de la dépression dans les cloisons creuses 6 des chambres 2 en zone de préchauffage A, puis, dans la zone de chauffage B ou de cuisson, une fonction de chauffage des blocs 5 à environ 1100°C, et enfin, dans les zones de refroidissement C et D, une fonction de refroidissement des blocs cuits 5 par l'air ambiant et, corrélativement, de préchauffage de cet air constituant le comburant du four 1, la zone de refroidissement forcé D étant suivie, dans le sens opposé au sens d'avancement du feu et de circulation des fumées de combustion, d'une zone E de déchargement des blocs carbonés 5 refroidis, puis éventuellement de chargement des blocs carbonés crus dans les alvéoles 4.

Le procédé de régulation du FAC 1 comprend essentiellement la régulation en température et/ou en pression des zones de préchauffage A, chauffage B et soufflage ou refroidissement naturel C du four 1, ainsi, éventuellement, que des étapes d'optimisation de la combustion par ajustement de l'injection du combustible par les rampes de chauffage 16, en fonction de la teneur en CO des fumées de combustion, telle que mesurée dans la rampe d'aspiration 11 par au moins un analyseur-détecteur de CO disposé dans l'une au moins de pipes 11a d'aspiration.

Pour assurer la conduite et la surveillance du FAC 1, le système de contrôle-commande de ce dernier peut comporter deux niveaux. Le premier peut s'étendre à l'ensemble des rampes 11 à 19, équipées de capteurs et d'actionneurs pilotés par des automates programmables, ainsi qu'à un réseau local d'atelier pour la communication entre les automates, ainsi que pour l'échange de données entre le premier niveau et le second, qui comprend un système central de calculateurs avec leurs équipements périphériques, permettant la communication avec le premier niveau, la supervision de l'ensemble des feux, la régulation centrale du FAC 1, la saisie de lois de consigne, la gestion des historiques des données des cuissons, la gestion des événements, et la mémorisation et l'édition des rapports de fin de cuisson.

Chaque feu est régulé par ligne de cloisons creuses 6 depuis la rampe de soufflage 18 jusqu'à la rampe d'aspiration 11, et, pour chaque ligne de cloisons creuses 6, la régulation est par exemple réalisée par un régulateur de type PID (Proportionnel Intégral et Dérivé).

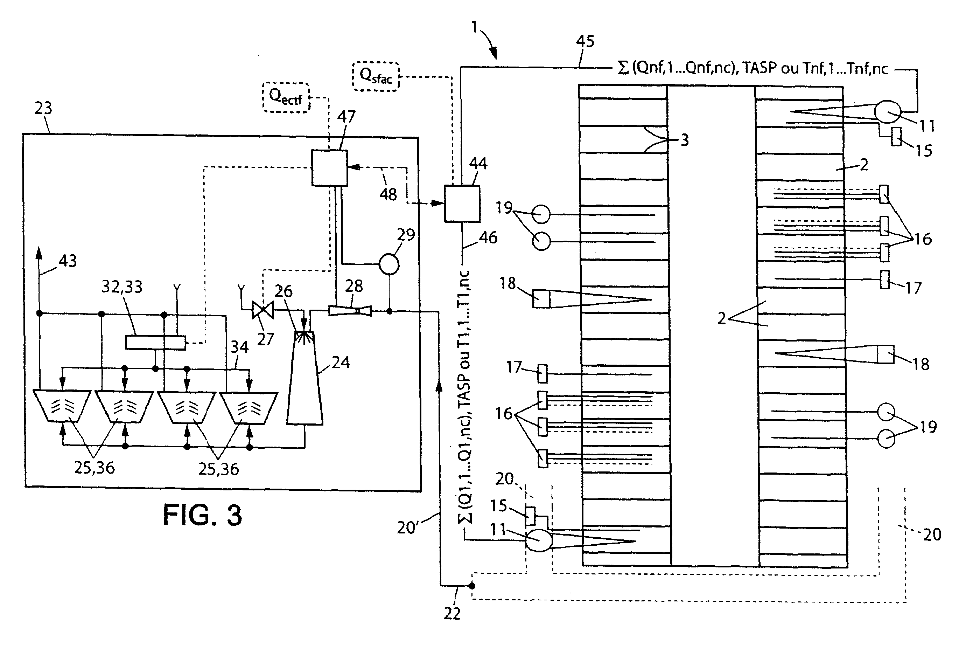

Les fumées de combustion extraites des feux par les rampes d'aspiration 11 sont collectées dans un conduit des fumées 20, par exemple un conduit cylindrique partiellement représenté sur la figure 2, pouvant avoir une forme en plan en U (voir en pointillés sur la figure 1) ou pouvant faire le tour du four, et dont la sortie 22 de la partie de conduit la plus proche du four dirige les fumées de combustion aspirées et collectées vers un centre de traitement des fumées (CTF) 23, représenté schématiquement sur la figure 3.

Ce CTF 23 est une installation d'épuration des fumées du FAC 1 et assure les fonctions suivantes :

- l'aspiration des fumées de cuisson émises par le FAC 1, avec une dépression contrôlée quasi constante,
- le refroidissement des fumées,
- une épuration à sec de ces fumées afin d'éliminer le fluor, les poussières et les goudrons que ces fumées contiennent, ces éléments polluants étant captés sous une forme permettant leur recyclage dans les cuves d'électrolyse de l'aluminium, et
- le rejet des fumées épurées à l'atmosphère.

Le procédé d'épuration à sec est basé sur la capacité d'un réactif pulvérulent, généralement de l'alumine, à assurer une neutralisation physico-chimique de ces polluants en captant le fluor et les hydrocarbures imbrûlés par adsorption ou captation. L'alumine pulvérulente est injectée dans le flux des fumées de combustion provenant du FAC 1, puis retenue dans des filtres en même temps que les poussières, après adsorption et/ou captation de la majeure partie des polluants : goudrons, fluor gazeux, dioxyde de soufre ($SO_2$). Le rendement d'arrêt des goudrons est d'autant meilleur qu'il s'agit d'éléments lourds (à poids moléculaire élevé, donc facilement condensables), tandis que les goudrons légers (non condensés) sont arrêtés à un moindre degré. L'alumine chargée, récupérée par la vidange des filtres, est ensuite recyclée pour partie en étant mélangée à de l'alumine fraîche et réinjectée dans le flux des fumées provenant du FAC 1, et pour le reste en étant envoyée aux cuves d'électrolyse de l'aluminium, où les éléments combustibles retenus dans l'alumine chargée sont brûlés, et le fluor recyclé sous une forme directement utilisable.

Les fonctions d'épuration des fumées de combustion assurées par le CTF 23 sont, dans l'ordre :

- le refroidissement dans une tour de refroidissement 24 du flux des fumées de combustion provenant du FAC 1,
- l'alimentation d'au moins un réacteur 25, mais de préférence de plusieurs réacteurs 25 en parallèle, en alumine pulvérulente (fraîche et recyclée),
- l'injection d'alumine dans chaque réacteur 25 avec répartition dans un flux de fumées de combustion traversant ce réacteur,
- la captation-adsorption des polluants, par l'alumine pulvérulente distribuée dans ledit flux,
- la filtration de l'alumine chargée des polluants et des poussières dudit flux,
- le recyclage de l'alumine chargée, par un nettoyage des filtres et l'évacuation de l'alumine chargée.

Le refroidissement des fumées consiste à abaisser leur température jusqu'à environ 100°C, afin de provoquer la condensation des hydrocarbures imbrûlés les plus lourds et les plus dangereux présents dans ces fumées et de baisser la température des fumées à une température acceptable par les tissus filtrants. Ce refroidissement est réalisé par évaporation totale d'eau injectée en fines gouttelettes dans la tour 24 par des pulvérisateurs, tels que celui schématisé en 26, alimentés en eau par une vanne 27 et en air de pulvérisation par une conduite (non représentée) débouchant dans la conduite d'eau entre la vanne 27 et le pulvérisateur 26. Cette pulvérisation fine permet d'obtenir une évaporation totale de l'eau injectée et ainsi d'éviter la formation d'acide fluorhydrique (HF) ou sulfurique (H2SO4) par condensation sur les parois internes de la tour 24. Le débit de la vanne 27 peut être, dans l'état de la technique, contrôlé par une boucle de régulation, qui est une boucle de contrôle par rétroaction, pour tendre à maintenir la température des fumées en sortie de la tour de refroidissement 24 alignée sur une consigne de température, tandis que le débit des fumées à l'entrée du CTF 23 est mesuré par un débitmètre 28, en amont de la tour 24 de refroidissement, sur l'extrémité aval d'un prolongement 20' du conduit des fumées qui assure la liaison avec le CTF 23.

Il existe plusieurs types de régulations du débit d'eau, qui ont toutes pour but d'injecter une quantité d'eau contrôlée, mais, qui, pour garantir une bonne taille des gouttelettes, font appel à différents principes (régulation de la pression eau et pression d'air constante, régulation des deux pressions en même temps, régulation des débits, ...).

Le circuit d'alimentation des réacteurs 25 en alumine fraîche comprend principalement, à partir d'un silo de stockage et d'alimentation, en amont, un système de criblage 32 et dosage 33, dont la sortie est reliée à un système de répartition 34 (les systèmes de dosage 33 et répartition 34 pouvant être regroupés en un seul dispositif) assurant la répartition de l'alumine fraîche de façon égale vers les différents réacteurs 25, dont chacun est ainsi alimenté en alumine fraîche.

La captation des vapeurs de goudron et du fluor gazeux par l'alumine correspond précisément à la conjonction de deux phénomènes distincts, qui sont une captation mécanique de vésicules de goudron en surface et l'adsorption des vapeurs de goudron et de fluor à l'intérieur des pores des particules d'alumine.

Cette captation s'effectue dans les réacteurs 25, en général verticaux et de forme cylindrique ou à section transversale circulaire ou rectangulaire. L'alumine est injectée dans chaque réacteur 25 de la façon la plus homogène possible, afin de réduire la distance moyenne entre les molécules à capter et les grains d'alumine.

Après cette injection, la filtration de l'alumine chargée et des poussières est assurée par le gâteau filtrant qui se forme dans des filtres 36 (dont chacun est représenté associé au réacteur 25 correspondant), généralement réalisés sur des manches filtrantes. Le nettoyage des filtres 36 par soufflage d'air à basse pression, par intermittence et en sens opposé (à contre-courant du flux à filtrer), est piloté par la perte de charge de ces filtres 36 ou par une minuterie. L'alumine chargée tombe dans un lit fluidisé entretenu dans des trémies des filtres 36, d'où cette alumine chargée est ensuite en partie réinjectée dans les réacteurs 25 en étant mélangée à de l'alumine fraîche, et en partie déchargée par un trop plein sur un moyen de manutention l'évacuant vers un silo de reprise d'alumine chargée.

Le recyclage d'alumine chargée dans les réacteurs 25 est mis en oeuvre pour augmenter le rendement de la fonction captation.

Les fumées épurées sortant des réacteurs 25-filtres 36 sont évacuées à l'atmosphère par une cheminée 43.

FR- A- 2 887 782 décrit un tel CTF, relié par un conduit des fumées à un FAC tel que connu par US- A- 4859175 (ou EP- A- 0252856) .

Aujourd'hui, le système 44 de commande et régulation du FAC 1 et le système 47 de commande et contrôle du CTF 23 fonctionnent de manière indépendante l'un de l'autre.

Le conduit (d'aspiration) des fumées 20-20' est en général un conduit cylindrique en acier, permettant d'extraire, par dépression, les fumées de cuisson des blocs carbonés sortant du FAC 1 (et aspirées par les rampes d'aspiration 11 des feux en activité), et de les diriger vers le CTF 23.

La dégradation du conduit de fumées 20-20', ainsi d'ailleurs que des pipes 11a et rampes 11 d'aspiration, peut conduire à l'infiltration d'air ambiant, donc plus froid que les fumées, qui diminue la température moyenne des fumées, en favorisant ainsi la condensation et le dépôt de matières volatiles imbrulées et de résidus acides sur la face interne de la parois du conduit des fumées 20-20', en particulier.

De telles infiltrations d'air froid et la condensation d'une partie des fumées pouvant en résulter favorisent ainsi les phénomènes de corrosion des parties métalliques du conduit des fumées 20-20' et du CTF 23,

De plus, une mauvaise étanchéité des conduits d'aspiration des fumées du FAC 1, et en particulier du conduit des fumées 20-20' constitue également un facteur important de risques d'incendie, non seulement dans le conduit des fumées 20-20', mais également dans le FAC 1 et le CTF 23.

Il résulte de telles infiltrations d'air ambiant, et d'incendies qui peuvent en découler, à tout le moins des pertes de performance, et des perturbations d'exploitation, qui peuvent s'étendre jusqu'à des pertes d'exploitation, lorsque le fonctionnement du FAC 1 et/ou du CTF 23 doit être ralenti, mais encore des risques d'endommagements, et donc d'arrêts de fonctionnement de l'installation pour procéder aux travaux éventuellement nécessaires de réparation et remise en état.

A ce jour, seule une inspection visuelles minutieuse des différentes parties des conduits d'aspiration du FAC 1 permet de rendre compte d'éventuelles infiltrations parasites d'air ambiant.

En règle générale, dans de telles installations, une inspection et un nettoyage préventifs du conduit des fumées 20-20' jusqu'au CTF 23 sont réalisés annuellement, ce qui implique un arrêt ponctuel de production.

Toutefois, ces visites annuelles ne permettent pas d'éliminer tout risque d'incendie lié à une dégradation du conduit des fumées 20- 20', dans l'intervalle entre deux visites, ou lié à des défauts non détectés lors de ces inspections.

Le problème à la base de l'invention est de remédier aux inconvénients précités, et permettre d'éviter que l'infiltration d'air ambiant dans les conduits d'aspiration des fumées, et en particulier le conduit 20-20', susceptible d'être à l'origine de dépôts d'imbrûlés par condensation due au refroidissement des fumées et d'incendies, du fait que l'air infiltré constitue de l'air comburant, qui peut se trouver en contact avec des particules incandescentes constituées de coke de garnissage ou de matières volatiles de brai entraînées par les fumées, et des dépôts de matières volatiles de brai, en général sous forme de goudrons lourds, qui se sont accumulés plus ou moins rapidement au fil du temps, sur les parois dudit conduit des fumées, ne conduise à des pertes de performances, perturbations d'exploitation, voire même des pertes d'exploitation et endommagements, et, dans les cas les plus extrêmes, à des arrêts de fonctionnement de l'installation constituée par un FAC 1 associé à un CTF 23 par un conduit des fumées 20-20'.

A cet effet, l'invention propose un procédé de surveillance de l'état d'un conduit des fumées reliant chaque rampe d'aspiration d'un FAC, tel que décrit ci-dessus, à un CTF, également tel que décrit ci-dessus, et destiné à épurer les fumées de cuisson provenant du FAC, et collectées dans ledit conduit des fumées conduisant ces fumées au CTF, le procédé selon l'invention étant tel que défini par la revendication 1. Les revendications 2 à 12 définissent des modes de mise en oeuvre avantageux de l'invention.

Selon un mode de mise en oeuvre de l'invention, une détection de fuites sur ledit conduit des fumées comprend au moins une étape de comparaison des débits des fumées mesurés, d'une part, à la sortie du FAC, et, d'autre part, à l'entrée du CTF, et à en déduire un éventuel débit d'air $\Delta Q$ entrant par infiltration dans le conduit des fumées par calcul de la différence entre les débits mesurés, tel que : $\Delta Q = Qectf - Qsfac$, où Qsfac est le débit normé des fumées en sortie du FAC et Qectf est le débit normé des fumées à l'entrée du CTF.

Lorsque le FAC est, comme présenté ci-dessus, tel que chacune des pipes d'aspiration de chacune des rampes d'aspiration du FAC est équipée d'un débitmètre, le premier mode de mise en oeuvre du procédé de l'invention, tel que présenté ci-dessus, comprend avantageusement au moins une étape de mesure de Qsfac qui consiste à faire la somme des débits normés des fumées mesurés dans les pipes d'aspiration des rampes d'aspiration de tous les feux du FAC qui sont en communication avec des cloisons creuses chauffantes des chambres du FAC, de sorte que :

$$Qsfac = \sum_{f=1}^{f=nf} \sum_{c=1}^{c=nc} (Qf1...Qfc)$$ , où nf est le nombre de feux en opération dans le FAC, nc est le nombre de cloisons creuses chauffantes par chambre du FAC, et Qfc est le débit normé de la cloison creuse chauffante n° c du feu n° f.

Selon une variante de mise en oeuvre de ce procédé, qui peut s'utiliser alternativement ou cumulativement avec le mode de mise en oeuvre précité, la détection de fuite sur ledit conduit des fumées peut comprendre au moins une étape d'estimation du pourcentage d'infiltration (PI) d'air ambiant dans ledit conduit des fumées par la formule : $PI = (\frac{\Delta Q}{Qsfac}) X 100$ .

Dans ce cas, il est de plus avantageux que le procédé comprenne également au moins une étape de comparaison dudit pourcentage d'infiltration (PI) estimé d'air ambiant à au moins un seuil d'infiltration (SI), et à générer une alarme lorsque le pourcentage d'infiltration (PI) estimé est supérieur à au moins un seuil d'infiltration (SI) représentatif d'un niveau d'infiltration rendant nécessaire le déclenchement d'une action de contrôle, maintenance ou réparation du conduit des fumées.

Afin d'obtenir une information plus pertinente sur la criticité des fuites (infiltration d'air ambiant), il est avantageux que ce procédé comprenne de plus au moins une étape de suivi temporel de l'évolution du gradient du pourcentage d'infiltration (PI) d'air ambiant, mesuré au moins périodiquement, et à générer une alarme indiquant un gradient de fuite si le gradient de pourcentage d'infiltration est positif et croissant sur une période de surveillance au cours de laquelle des valeurs de PI calculées successivement sont historisées et comparées entre elles.

La mise en oeuvre d'une détection d'incendie est très facilitée, lorsque le FAC comprend, comme décrit ci-dessus, une détection de température dans chacune des pipes d'aspiration des rampes d'aspiration. Dans ce cas, la température des fumées de combustion à la sortie du FAC, c'est-à-dire à l'entrée du conduit des fumées, peut-être une moyenne, éventuellement pondérée en fonction des débits de fumées dans les pipes, des températures mesurées dans ces pipes d'aspiration, cette moyenne pondérée des températures des pipes donnant une image suffisamment précise d'une température dite d'aspiration, correspondant à la température des fumées à l'entrée d'une rampe d'aspiration dans le conduit des fumées.

Mais, comme le débit et la température des fumées sont connus dans chaque pipe d'aspiration, le procédé de l'invention comprend avantageusement de plus une étape consistant à considérer que l'enthalpie E1 des fumées de cuisson à la sortie du FAC est égale à la somme des enthalpies des fumées de cuisson extraites des rampes d'aspiration en opération sur le FAC.

En outre, le procédé de l'invention comprend de plus au moins une étape d'émission d'au moins une alarme, afin de déclencher au moins une action de contrôle et/ou de mise en protection dudit conduit des fumées, si l'apport d'énergie X relatif à un éventuel incendie dans le conduit est supérieur à au moins un seuil positif, permettant de s'affranchir de l'imprécision des mesures et de perturbations liées à des phases transitoires de fonctionnement du FAC et/ou du CTF, comme des permutations de feu, virages, ou stationnement de feu dans le FAC.

Par analogie avec le suivi temporel de l'évolution du gradient du pourcentage d'infiltration, en terme de détection de fuites, la détection d'incendie selon le procédé de l'invention peut avantageusement comprendre, de plus, au moins une étape de suivi temporel de l'évolution du gradient de l'apport d'énergie (X), mesuré au moins périodiquement, et à générer une alarme d'incendie indiquant un gradient d'apport énergétique critique si le gradient d'apport d'énergie est positif et croissant sur une période de surveillance au cours de laquelle des valeurs de X calculées successivement sont historisées et comparées entre elles.

On comprend que le procédé de l'invention, tant pour la détection de fuites par infiltration d'air ambiant que pour la détection d'incendie dans le conduit des fumées, peut être mis en oeuvre sans qu'il soit nécessaire de compléter l'instrumentation de mesure et d'enregistrement qui équipe déjà les FAC et CTF de l'état de la technique, présenté ci-dessus, si ce n'est l'implantation d'un détecteur de température des fumées à l'entrée du CTF si celui-ci n'est pas déjà existant, pour faciliter le calcul de l'enthalpie des fumées de combustion à la sortie du conduit des fumées.

En effet, les grandeurs physiques considérées dans la mise en oeuvre du procédé selon l'invention peuvent être déterminées, par mesure et/ou par calcul, à partir de paramètres déjà mesurés et enregistrés par les systèmes de commande du FAC et du CTF des types connus présentés ci-dessus pour contrôler et commander leur fonctionnement respectif.

En conséquence, le procédé de surveillance selon l'invention consiste, de plus, à utiliser des informations échangées et/ou transmises de l'un quelconque à l'autre d'au moins un système de commande et régulation du FAC et d'au moins un système de commande et contrôle du CTF, et relatives au débit et/ou la température et/ou l'enthalpie des fumées de cuisson, à l'entrée du CTF et/ou en sortie du FAC, en particulier au niveau de chaque rampe d'aspiration ou de chaque pipe d'aspiration du FAC, afin d'assurer la surveillance de l'état dudit conduit des fumées, l'émission éventuelle d'au moins un signal de détection de fuite et/ou d'incendie, et/ou d'au moins une alarme, par l'un au moins desdits système de commande, et/ou d'au moins une commande de protection du FAC et/ou du CTF, et/ou de sécurisation de son fonctionnement.

D'autres avantages et caractéristiques de l'invention ressortiront de la description donnée ci-dessous, à titre non limitatif, d'exemples de réalisation décrits en référence aux dessins annexés, sur lesquels :

- les figures 1 et 2 sont des vues schématiques respectivement en plan, et en vue partielle en perspective avec arrachement d'un FAC du type concerné par l'invention, et qui ont déjà été décrites ci-dessus, et
- la figure 3 est une vue schématique en plan, analogue à la figure 1, du FAC de la figure 1 dont le système de commande et régulation coopère avec celui d'un CTF du type concerné par l'invention et également schématisé en plan sur la figure 3, déjà substantiellement décrite ci-dessus, pour la mise en oeuvre du procédé de l'invention.

Pour la surveillance de l'état du conduit des fumées 20-20', le procédé de l'invention propose tout d'abord de détecter les fuites dans ce conduit 20-20', par infiltration d'air ambiant. A cet effet, une première étape de ce procédé consiste à comparer le débit des fumées de cuisson mesuré en sortie du FAC 1 au débit des fumées de cuisson mesuré à l'entrée du CTF 23, c'est-à-dire à l'entrée de la tour de refroidissement 24, de façon à pouvoir surveiller automatiquement le niveau d'étanchéité du conduit des fumées 20-20'.

Si l'on désigne par $\Delta Q$ le débit éventuel d'air ambiant entrant par infiltration dans le conduit des fumées 20-20', ce débit $\Delta Q$ peut être défini par la formule (1) suivante : $\Delta Q = Qectf - Qsfac$, où Qectf est le débit normé des fumées à l'entrée du CTF 23, c'est-à-dire le débit mesuré par le débitmètre 28 en amont de la tour 24 de refroidissement, à l'extrémité aval du conduit des fumées 20-20', et Qsfac est le débit normé des fumées à la sortie du FAC 1.

Ce débit $Q_{sfac}$ peut être facilement mesuré, du fait de l'instrumentation de mesure déjà en place dans le FAC 1 connu présenté ci-dessus et nécessaire pour le pilotage normal de ce dernier, en particulier grâce aux débitmètres 12 et détecteurs de température (thermocouples) 13 implantés dans les pipes d'aspiration 11 a des rampes d'aspiration 11 du FAC 1, et ce débit $Q_{sfac}$ est égal à la somme des débits des fumées de cuisson en sortie des rampes d'aspiration 11 en opération dans le FAC 1, le débit de sortie de chaque rampe d'aspiration 11 en opération étant lui-même la somme des débits de sortie de toutes les pipes d'aspiration 11a de cette rampe 11, de sorte que si nf est le nombre de feux en opération dans le FAC 1, et nc est le nombre de cloisons creuses chauffantes 6 par chambre 2 du FAC 1, et si Qfc est le débit normé de la cloison creuse chauffante 6 n° c du feu n° f, le débit de sortie $Q_{sfac}$ peut être donné par la

formule (2) : $\displaystyle Qsfac = \sum_{f=1}^{f=nf} \sum_{c=1}^{c=nc} (Qf1...Qfc)$.

Or le système de commande et contrôle 44 du FAC 1 reçoit, via un réseau de communication 45 et 46, des signaux représentatifs des débits Qfc et températures Tfc des fumées de cuisson aux niveaux des nf x nc pipes d'aspiration 11a des rampes d'aspiration 11 en opération dans le FAC 1, et, grâce à des automates programmable du système 44 comme éventuellement, des rampes d'aspiration 11, le système 44 peut, éventuellement, recevoir de chaque rampe d'aspiration 11 en opération, un signal de débit de sortie de cette rampe 11, égal à la somme des débits élémentaires des pipes 11 a de cette rampe 11, soit pour le feu n° 1, le débit $\sum (Q1, 1...Q1, nc)$, et pour le dernier feu en opération de n° nf, le débit $\sum (Qnf, 1, ...Qnf, nc)$, puis calculer la somme des débits de sortie des rampes 11 en opération, c'est-à-dire le débit de sortie Qsfac du FAC 1.

De son côté, le système de commande 47 du CTF 23 reçoit du débitmètre 28 un signal représentatif du débit d'entrée dans le CTF 23 $Q_{ectf}$ .

Les deux systèmes de commande 44 et 47 communiquant l'un avec l'autre par la ligne de transmission 48, ils peuvent s'échanger ces informations relatives au débit $Q_{ectf}$ et au débit $Q_{sfac}$ égal à la somme des débits de sortie des rampes 11 en opération, par la formule (2) indiquée ci-dessus, et l'un et/ou l'autre des deux systèmes de commande 44 et 47 peut calculer le débit éventuel $\Delta Q$ d'air ambiant s'infiltrant par aspiration dans le conduit des fumées 20-20' en dépression.

De manière simple, ce débit $\Delta Q$, lorsqu'il est non nul, peut être comparé à au moins un seuil de débit d'infiltration, ou, de préférence, à plusieurs seuils de valeurs progressivement croissantes, de sorte que si $\Delta Q$ est supérieur à l'un de ces seuils, l'un et/ou l'autre des deux systèmes de commande 44 et 47 ayant constaté cette condition peut émettre un signal d'alarme, dont la criticité est d'autant plus important que $\Delta Q$ est supérieur à un seuil de valeur élevé.

Alternativement à cette comparaison de $\Delta Q$ à au moins un seuil de débit d'infiltration, ou cumulativement à cette étape, le procédé de l'invention peut également comprendre une étape consistant à estimer le pourcentage d'infiltration d'air (PI) dans le conduit des fumées 20-20' par la formule (3) suivante :

$$PI = (\frac{\Delta Q}{Qsfac})X100 .$$

Le calcul de ce pourcentage estimé d'infiltration d'air ne pose aucune difficulté à l'un et/ou l'autre des deux systèmes de commande 44 et 47, puisque le débit d'air ambiant infiltré $\Delta Q$ est connu, comme indiqué ci-dessus, ainsi que le débit $Q_{sfac}$ des fumées de combustion en sortie du FAC 1 (voir la formule (2)).

En fonction des niveaux d'infiltration d'air ambiant dans le conduit des fumées 20-20', le système de commande 44 du FAC 1 et/ou celui 47 du CTF 23 peut générer des alarmes, afin de déclencher une action de contrôle et de maintenance du conduit des fumées 20-20', et/ou une action de sécurisation ou de protection respectivement du FAC 1 et/ou du CTF 23.

Dans l'un et/ou l'autre des deux systèmes de commande 44 et 47, le calcul des grandeurs physiques définies par les formules (2), (1) et (3), en fonction des valeurs des paramètres appropriés, mesurés comme indiqués ci-dessus, peut être assuré par un module de détection, intégré dans l'un au moins des deux systèmes de commande 44 et 47 et activé automatiquement et périodiquement, par une minuterie, par exemple tous les mois, ou toutes les semaines, pendant une période d'au moins un cycle, après une étape de validation, par des opérateurs, d'une liste des débitmètres ou capteurs de débits, dont les mesures peuvent être utilisées pour le calcul des formules (1) et (2) ci-dessus.

Une telle procédure permet de s'affranchir de valeurs erronées de débit des fumées qui seraient dues, par exemple, à un bouchage d'un débitmètre, notamment du type à tube de venturi, et cette procédure a pour avantage supplémentaire d'améliorer le suivi d'exploitation.

De plus, selon le procédé de l'invention, les valeurs du débit d'air ambiant infiltré ΔQ et du pourcentage estimé d'infiltration d'air PI calculées, de préférence, en continu, mais au moins périodiquement, sont historisées et comparées, d'une part, à des seuils respectifs, et, d'autre part, entre elles, afin d'assurer un suivi temporel de l'évolution du gradient de ΔQ et du gradient du pourcentage d'infiltration (PI).

De même que pour la comparaison de ΔQ avec au moins un seuil, le procédé peut comprendre au moins une étape de comparaison du pourcentage d'infiltration estimé (PI) d'air ambiant à au moins un seuil d'infiltration (SI), et à générer une alarme si PI est supérieur à au moins un seuil d'infiltration SI, qui est choisi comme étant représentatif d'un niveau d'infiltration qui rend nécessaire le déclenchement d'une action de contrôle et de réparation ou maintenance du conduit des fumées 20-20'.

A titre d'exemple, si l'on considère un seuil d'infiltration SI=10%, dès que le PI mesuré est supérieur à 10%, une alarme de fuite sur le conduit des fumées 20-20' est activée par l'un et/ou l'autre des deux systèmes de commande 44 et 47.

En outre, si le suivi temporel de l'évolution du gradient du pourcentage d'infiltration PI d'air ambiant indique que ce gradient est positif et croissant sur une durée représentative, par exemple, l'un au moins des systèmes de commande 44 et 47 active le déclenchement d'une alarme indiquant un gradient de fuite critique.

Dans le cas d'une nouvelle installation ou d'une installation rénovée, dont les fuites sont minimisées de manière optimale, il peut s'avérer très utile de prendre comme référence les valeurs de débit respectivement au démarrage ou au redémarrage du FAC 1 afin d'effectuer une estimation de l'erreur systématique de mesure des fuites au cours d'une période d'au moins un cycle de cuisson.

Alternativement à la détection de fuite telle que présentée ci-dessus, ou, de préférence, consécutivement ou cumulativement à cette détection, le procédé de l'invention propose également une détection d'incendie dans le conduit des fumées 20-20'.

A cet effet, sur la base, d'une part, des mesures de débit indiquées ci-dessus, pour la détection des fuites par infiltration d'air ambiant, et, d'autre part, en mesurant, de préférence en continu, mais au moins périodiquement à une fréquence significative, les températures des fumées de combustion en sortie du FAC 1 et en entrée du CTF 23, le procédé de l'invention propose de calculer l'enthalpie des fumées de combustion à chaque extrémités du conduit des fumées 20-20'. La température ambiante est également mesurée, elle aussi de préférence en continu, ou au moins périodiquement à une fréquence suffisamment élevée pour que le suivi temporel de température ambiante soit pertinent, et en compensant, selon le procédé de l'invention, les pertes thermiques de la sortie du FAC 1 à l'entrée du CTF 23, il est possible de surveiller l'apparition d'un éventuel incendie dans le conduit des fumées 20-20', en considérant qu'un tel incendie correspond à un apport d'énergie X exprimé par la formule (4) : $X = E2 - E1 + P$, où E1 est l'enthalpie des fumées de combustion en sortie du FAC 1, E2 est l'enthalpie des fumées de combustion en entrée du CTF 23, c'est-à-dire à l'entrée de la tour de refroidissement 24, P représente les pertes thermiques, qui sont la somme d'une estimation de pertes par infiltrations d'air ambiant PA, déterminable à partir de la connaissance de ΔQ et/ou du pourcentage d'infiltration PI précités, et de pertes en ligne dans le conduit des fumées 20-20', et plus précisément entre la sortie des rampes d'aspiration 11 en opération et l'entrée de la tour de refroidissement 24, ces pertes en ligne étant une fonction non seulement de la température ambiante et de la température et du débit des fumées de combustion, mais également du dimensionnement et de l'isolation thermique du conduit des fumées 20-20', et X correspond à l'apport énergétique d'un éventuel incendie, et est donc normalement égal à 0 ($X = E2 - E1 + PL + PA$).

Les débits des fumées de combustion en sortie du FAC 1 et à l'entrée de la tour 24 de refroidissement peuvent être mesurés et enregistrés comme indiqué ci-dessus, au niveaux des pipes d'aspiration 11a des rampes d'aspiration 11 en opération, pour le FAC 1, et par le débitmètre 28 en amont de la tour 24 pour le CTF 23.

Si le CTF 23 n'est pas équipé d'un détecteur de température des fumées de combustion à l'entrée du CTF 23, il conviendra d'équiper le CTF 23 d'un tel détecteur de température 29, comme représenté sur la figure 3, immédiatement en amont du débitmètre 28, à l'extrémité aval du conduit des fumées 20-20'.

Ainsi, l'enthalpie E2 des fumées de combustion à l'entrée de la tour de refroidissement 24 peut être aisément déterminée par le système de commande 47 du CTF 23 à partir du débitmètre 28 et du détecteur de température 29.

Concernant la température des fumées de combustion en sortie du FAC 1, on peut considérer, selon l'invention, que cette température est une température TASP mesurée à l'aspiration des fumées à la sortie de chacune des rampes d'aspiration 11 en opération, c'est-à-dire au débouché de cette rampe 11 dans la portion correspondante du conduit de fumées 20, comme représenté sur la figure 2.

Cette température d'aspiration TASP peut être donnée par un détecteur de température implanté à ce niveau dans la rampe d'aspiration 11 correspondante, ou par une moyenne pondérée des températures des fumées de combustion qui sont données par les détecteurs de température 13 implantés dans les pipes d'aspiration 11 a de cette rampe 11. La pondération de ces mesures de température est effectuée en fonction des débits individuels des fumées de combustion mesurées dans les débitmètres 12 de ces pipes d'aspiration 11a.

En variante, l'enthalpie E1 des fumées de combustion en sortie du FAC 1 peut être égale à la somme des enthalpies des fumées de combustion en sortie de chacune des rampes d'aspiration 11 en opération, l'enthalpie pour chaque rampe 11 étant elle-même la somme des enthalpies individuelles au niveau des différentes pipes d'aspiration 11a de cette rampe 11, puisque les valeurs de débit et de température propres à chaque pipe d'aspiration 11a sont connues, soit, pour le premier feu, les températures T1, 1...T1, nc et débits correspondants Q1, 1...Q1, nc, et pour le second et dernier feu sur la figure 3, Tnf, 1...Tnf, nc et les débits correspondants Qnf, 1...Qnf, nc.

En variante également, le débit des fumées de combustion en sortie du FAC 1 peut être déterminé selon la formule (2) précitée, et la température des fumées en sortie du FAC 1 peut être mesurée dans le conduit des fumées 20, à l'aide d'au moins un détecteur de température implanté à ce niveau, et en communication avec le système de commande 44.

Comme pour la détection de fuites présentée ci-dessus, il est possible, selon le procédé de l'invention, de comparer l'apport énergétique X, relatif à un éventuel incendie dans le conduit des fumées 20-20', à au moins un seuil positif , de valeur choisie de sorte à permettre de s'affranchir de l'imprécision des mesures et perturbations liées à des phases transitoires de fonctionnement du FAC 1 et/ou du CTF 23, de sorte que, si X est supérieur à ce seuil, au moins une alarme est émise par l'un au moins des systèmes de commande 44 et 47, afin de déclencher une action de contrôle et/ou de mise en protection du conduit des fumées 20-20'. Par exemple, des phases transitoires de fonctionnement du FAC 1 peuvent être les permutations de feux, virages et stationnements de feux.

Une permutation de feu est, dans le FAC 1, une opération d'avancement de feu d'une chambre 2 à la chambre 2 immédiatement en aval par rapport au sens des fumées, et au cours de laquelle la rampe d'aspiration 11 du feu correspondant est déconnectée puis reconnectée au conduit 20 d'aspiration des fumées. On comprend qu'une permutation de feu génère une baisse des températures des fumées, ainsi que des variations des débits d'aspiration.

Un virage est une configuration ou situation pendant laquelle un feu est réparti sur les deux travées 1a et 1 b du FAC 1, c'est-à-dire que les rampes 11 à 19 de ce feu sont, pour certaines, au-dessus de chambres 2 d'une travée 1a ou 1 b, et pour d'autres rampes au dessus de chambres 2 de l'autre travée 1 b ou 1a. Ce « feu », c'est à-dire cet ensemble de rampes, est donc soumis à des déperditions thermiques et des pertes de charge supplémentaires correspondant au passage et au mélange des fumées dans le carneau de virage 10 concerné. Au cours d'un virage, les débits des fumées et les gradients de température peuvent être réduits.

Un stationnement de feu correspond à une procédure spécifique permettant de stopper l'avancement du feu et de stationner les rampes 11 à 19 d'un feu sur des mêmes chambres 2 pendant une durée pouvant atteindre plusieurs jours. Cette procédure met en oeuvre une réduction importante des débits d'aspiration, un arrêt des zones de soufflage et de refroidissement, ainsi qu'une limitation de l'injection de combustibles dans la zone de chauffage.

En conséquence, au cours d'un stationnement de feu, la température et le débit des fumées à la sortie du FAC 1 et à l'entrée du CTF 23 sont très nettement diminués.

Il est, bien entendu, également indiqué d'assurer, comme pour le pourcentage estimé d'infiltration d'air PI précité, un suivi temporel de l'évolution du gradient de l'apport énergétique X, mesuré de préférence en continu et au moins périodiquement, et, sur une période d'observation donnée à rechercher si le gradient d'apport énergétique est positif et croissant en comparant entre elles les valeurs de X calculées successivement et historisées, pour générer une alarme d'incendie, si un gradient d'apport énergétique critique est détecté.

Ces opérations de comparaison à des seuils et/ou de suivi temporel de l'évolution du gradient de l'apport énergétique X peuvent également être effectuées par l'un et/ou l'autre des deux systèmes de commande 44 et 47, qui se transmettent et s'échangent les informations correspondantes, en terme de débit, température, enthalpie, pourcentage estimé d'infiltration d'air, apport énergétique et gradient de certaines au moins de ces variables, pour les fumées de cuisson à l'entrée du CTF 23 et/ou en sortie du FAC 1, et en particulier au niveau de chaque rampe d'aspiration 11 ou même de chaque pipe d'aspiration 11a du FAC 1, afin d'assurer la surveillance de l'état du conduit des fumées 20-20', et, le cas échéant, l'émission d'au moins un signal de détection de fuite et/ou d'incendie, d'au moins une alarme et/ou d'au moins une commande de protection ou de sécurisation du FAC 1 et/ou du CTF 23.

## Revendications

1. Procédé de surveillance de l'état d'un conduit des fumées (20- 20') reliant chaque rampe (11) d'aspiration d'un four à cuire (FAC) (1) des blocs carbonés (5), destinés à l'électrométallurgie, tels que des anodes ou cathodes en carbone destinées à la production par électrolyse de l'aluminium, à un centre de traitement des fumées (CTF) (23), destiné à épurer les fumées de cuisson provenant du FAC (1), qui est un four de cuisson du type dit « à feu tournant » et de préférence « à chambres ouvertes », ou « à chambres couvertes » dont les fumées de cuisson sont aspirées par au moins une rampe (1) d'aspiration du FAC (1) et collectées dans ledit conduit des fumées (20- 20') conduisant les fumées au CTF (23), le procédé étant **caractérisé en ce qu'**il comprend au moins une étape de détection d'incendie dans ledit conduit (20- 20'), laquelle étape de détection d'incendie dans ledit conduit des fumées (20- 20') comprend elle- même au moins une étape de mesure, de préférence en continu, des débits et températures des fumées à chaque rampe (11) d'aspiration du FAC (1) et en entrée du CTF (23), et le calcul de l'enthalpie E1 à l'extrémité dudit conduit (20- 20') reliée à la sortie du FAC (1) et de l'enthalpie E2 à l'extrémité dudit conduit reliée à l'entrée du CTF (23), ainsi que la détermination des pertes thermiques P entre la sortie du FAC (1) et l'entrée du CTF (23), et la détermination de l'apparition d'un incendie dans ledit conduit (20- 20') si un apport d'énergie X, tel que : X = E2- E1 + P, est positif.

2. Procédé selon la revendication 1, **caractérisé en ce que** lesdites pertes thermiques P sont au moins la somme de pertes en ligne PL, qui sont fonction notamment de la température et du débit des fumées et de la température ambiante, de préférence mesurées également en continu, et d'une estimation de pertes par infiltration d'air ambiant PA dans ledit conduit des fumées (20- 20'), de sorte que X = E2 - EI + PL + PA.

3. Procédé selon l'une des revendications 1 et 2, **caractérisé en ce qu'**il comprend, de plus, une étape consistant à considérer que l'enthalpie E1 des fumées de cuisson à la sortie du FAC (1) est égale à la somme des enthalpies des fumées de cuisson extraites des rampes (11) d'aspiration en opération sur le FAC (1).

4. Procédé selon l'une quelconque des revendications 1 à 3, **caractérisé en ce qu'**il comprend en plus au moins une étape d'émission d'au moins une alarme, afin de déclencher au moins une action de contrôle et/ou de mise en protection dudit conduit des fumées (20- 20'), si l'apport d'énergie X relatif à un éventuel incendie dans le conduit est supérieur à au moins un seuil positif, permettant de s'affranchir de l'imprécision des mesures et de perturbations liées à des phases transitoires de fonctionnement du FAC (1) et/ou du CTF (23) .

5. Procédé selon l'une quelconque des revendications 1 à 4, **caractérisé en ce qu'**il comprend, de plus, au moins une étape de suivi temporel de l'évolution du gradient de l'apport d'énergie (X), mesuré au moins périodiquement, et à générer une alarme d'incendie indiquant un gradient d'apport énergétique critique si le gradient d'apport d'énergie est positif et croissant sur une période de surveillance au cours de laquelle des valeurs de X calculées successivement sont historisées et comparées entre elles.

6. Procédé selon l'une quelconque des revendications 1 à 5, **caractérisé en ce qu'**il comprend de plus au moins une étape de détection de fuite consistant en des entrées parasites d'air ambiant dans ledit conduit des fumées (20- 20'), ladite détection de fuite comprenant au moins une étape de comparaison des débits de fumées mesurés, d'une part, à la sortie du FAC (1), et, d'autre part, à l'entrée du CTF (23), et la déduction d'un éventuel débit d'air $\Delta Q$ entrant par infiltration dans le conduit de fumées (20- 20') par calcul de la différence entre les débits mesurés, tel que : $\Delta Q = Q_{ectf}$- $Q_{sfac}$, où $Q_{sfac}$ est le débit normé des fumées en sortie du FAC (1) et $Q_{ectf}$ est le débit normé des fumées à l'entrée du CTF (23) .

7. Procédé selon la revendication 6, **caractérisé en ce qu'**il comprend au moins une étape de mesure de $Q_{sfac}$ consistant à faire la somme des débits normés des fumées mesurés dans les pipes d'aspiration (11a) des rampes d'aspiration (11) de tous les feux du FAC (1) qui sont en communication avec des cloisons (6) creuses chauffantes des chambres (2) du FAC (1), de sorte que :

$$Qsfac = \sum_{f=1}^{f=nf} \sum_{c=1}^{c=nc} (Qf1...Qfc)$$, où nf est le nombre de feux en opération dans le FAC (1), nc est le nombre de cloisons (6) creuses chauffantes par chambre (2) du FAC (1), et Qfc est le débit normé de la cloison creuse chauffante n ° c du feu n ° f.

8. Procédé selon l'une quelconque des revendications 6 et 7, **caractérisé en ce que** la détection de fuites sur ledit conduit des fumées (20-20') comprend au moins une étape d'estimation du pourcentage d'infiltration (PI) d'air ambiant dans ledit conduit des fumées par la formule :

$$PI = (\frac{\Delta Q}{Qsfac})X100 .$$

9. Procédé selon la revendication 8, **caractérisé en ce qu'**il comprend, de plus, au moins une étape de comparaison dudit pourcentage d'infiltration (PI) estimé d'air ambiant à au moins un seuil d'infiltration (SI) par exemple SI=10%, et à générer une alarme lorsque le pourcentage d'infiltration (PI) estimé est supérieur à au moins un seuil d'infiltration (SI) par exemple PI>10%, représentatif d'un niveau d'infiltration rendant nécessaire le déclenchement d'une action de contrôle, maintenance ou réparation du conduit des fumées (20- 20') .

10. Procédé selon l'une quelconque des revendications 8 et 9, **caractérisé en ce qu'**il comprend, de plus, au moins une étape de suivi temporel de l'évolution du gradient du pourcentage d'infiltration (PI) d'air ambiant, mesuré au moins périodiquement, et à générer une alarme indiquant un gradient de fuite si le gradient de pourcentage d'infiltration est positif et croissant sur une période de surveillance au cours de laquelle des valeurs de PI calculées successivement sont historisées et comparées entre elles.

11. Procédé selon l'une quelconque des revendications 6 à 10, **caractérisé en ce qu'**il comprend, de plus, au moins une étape d'estimation de l'erreur systématique de mesure des fuites au cours d'une période d'au moins un cycle de cuisson en prenant comme référence les valeurs de débit au démarrage ou au redémarrage du FAC (1) dans le cas respectivement d'une nouvelle installation ou d'une installation rénovée, dont les fuites sont minimisées de manière optimale.

12. Procédé selon l'une quelconque des revendications 1 à 11, **caractérisé en ce qu'**il consiste, de plus, à utiliser des informations échangées et/ou transmises de l'un quelconque à l'autre d'au moins un système 44 de commande et régulation du FAC (1) et d'au moins un système (47) de commande et contrôle du CTF (23), et relatives au débit et/ou la température et/ou l'enthalpie des fumées de cuisson, à l'entrée du CTF (23) et/ou en sortie du FAC (1), en particulier au niveau de chaque rampe (11) d'aspiration ou de chaque pipe (11a) d'aspiration du FAC (1), afin d'assurer la surveillance de l'état dudit conduit des fumées (20- 20'), l'émission éventuelle d'au moins un signal de détection de fuite et/ou d'incendie, et/ou d'au moins une alarme, par l'un au moins desdits systèmes de commande (44, 47), et/ou d'au moins une commande de protection du FAC (1) et/ou du CTF (23), et/ou de sécurisation de son fonctionnement.

**Patentansprüche**

1. Verfahren zur Überwachung des Zustands eines Rauchgaskanals (20- 20'), der jede Absaugrampe (11) eines Ofens (FAC) (1) zum Brennen der für die Elektrometallurgie bestimmten kohlenstoffhaltigen Blöcke (5), wie für die Produktion von Aluminium durch Elektrolyse bestimmte Kohlenstoffanoden oder- kathoden, mit einem Rauchgasbehandlungszentrum (CTF) (23) verbindet, das dazu bestimmt ist, die vom FAC (1) kommenden Brennrauchgase zu reinigen, der ein Brennofen der Art «Ringkammerofen» und vorzugsweise «mit offenen Kammern», oder «mit geschlossenen Kammern» ist, dessen Brennrauchgase von mindestens einer Absaugrampe (11) des FAC (1) abgesaugt und im Rauchgaskanal (20- 20') gesammelt wird, der die Rauchgase zum CTF (23) führt, wobei das Verfahren **dadurch gekennzeichnet ist, dass** es mindestens einen Schritt der Erfassung eines Brands im Kanal (20- 20') enthält, wobei der Branderfassungsschritt im Rauchgaskanal (20- 20') selbst mindestens einen Schritt des Messens, vorzugsweise durchgehend, der Durchsätze und Temperaturen der Rauchgase an jeder Absaugrampe (11) des FAC (1) und am Eingang des CTF (23), und der Berechnung der Enthalpie E1 an dem mit dem Ausgang des FAC (1) verbundenen Ende des Kanals (20- 20') und der Enthalpie E2 an dem mit dem Eingang des CTF (23) verbundenen Ende des Kanals, sowie der Ermittlung der Wärmeverluste P zwischen dem Ausgang des FAC (1) und dem Eingang des CTF (23) und der Ermittlung des Auftretens eines Brands in dem Kanal (20- 20') enthält, wenn eine Energiezufuhr X derart, dass gilt: X = E2- E1 +P, positiv ist.

2. Verfahren nach Anspruch 1, **dadurch gekennzeichnet, dass** die Wärmeverluste P mindestens die Summe von Leitungsverlusten PL sind, die insbesondere von der Temperatur und vom Durchsatz der Rauchgase und von der Umgebungstemperatur, vorzugsweise ebenfalls durchgehend gemessen, und von einer Verlustschätzung durch Eindringen von Umgebungsluft PA in den Rauchgaskanal (20-20') abhängen, so dass gilt X = E2 - E1 + PL + PA.

3. Verfahren nach einem der Ansprüche 1 und 2, **dadurch gekennzeichnet, dass** es außerdem einen Schritt enthält, der darin besteht anzunehmen, dass die Enthalpie E1 der Brennrauchgase am Ausgang des FAC (1) gleich der Summe der Enthalpien der von den Absaugrampen (11) im Betrieb am FAC (1) entfernten Brennrauchgase ist.

4. Verfahren nach einem der Ansprüche 1 bis 3, **dadurch gekennzeichnet, dass** es außerdem mindestens einen Schritt des Aussendens mindestens eines Alarms enthält, um mindestens eine Aktion der Kontrolle und/oder des Unterschutzstellens des Rauchgaskanals (20-20') enthält, wenn die Energiezufuhr X bezüglich eines möglichen Brands im Kanal höher als mindestens eine positive Schwelle ist, was es ermöglicht, sich von der Ungenauigkeit der Messungen und von Störungen zu befreien, die mit Betriebsübergangsphasen des FAC (1) und/oder des CTF (23) verbunden sind.

5. Verfahren nach einem der Ansprüche 1 bis 4, **dadurch gekennzeichnet, dass** es außerdem mindestens einen Schritt der zeitlichen Verfolgung der Entwicklung des Gradienten der Energiezufuhr (X), der mindestens periodisch gemessen wird, und der Erzeugung eines Feueralarms enthält, der einen kritischen Energiezufuhrgradienten anzeigt, wenn der Energiezufuhrgradient positiv ist und in einem Überwachungszeitraum zunimmt, während dessen nacheinander berechnete Werte von X historisiert und miteinander verglichen werden.

6. Verfahren nach einem der Ansprüche 1 bis 5, **dadurch gekennzeichnet, dass** es außerdem mindestens einen Schritt der Erfassung eines Lecks enthält, das aus parasitären Umgebungslufteintritten in den Rauchgaskanal (20- 20') besteht, wobei die Leckerfassung mindestens einen Schritt des Vergleichs der gemessenen Rauchgasdurchsätze einerseits am Ausgang des FAC (1) und andererseits am Eingang des CTF (23) und die Ableitung eines möglichen Luftdurchsatzes ΔQ, der durch Eindringen in den Rauchgaskanal (20- 20') eintritt, durch Berechnung der Differenz zwischen den gemessenen Werten enthält, derart, dass gilt: $\Delta Q = Q_{ectf} - Q_{sfac}$, wobei $Q_{sfac}$ der genormte Durchsatz der Rauchgase am Ausgang des FAC (1) und $Q_{ectf}$ der genormte Durchsatz der Rauchgase am Eingang des CTF (23) ist.

7.  Verfahren nach Anspruch 6, **dadurch gekennzeichnet, dass** es mindestens einen Schritt der Messung von $Q_{sfac}$ enthält, der darin besteht, die Summe der genormten Durchsätze der Rauchgase zu bilden, die in den Absaugstutzen (11a) der Absaugrampen (11) aller Feuerstellen des FAC (1) gemessen werden, die mit Hohlwandheizungen (6) der Kammern (2) des FAC (1) in Verbindung stehen, derart, dass gilt: $Qsfac = \sum_{f=1}^{f=nf} \sum_{c=1}^{c=nc} (Qf1 \ldots Qfc)$, wobei nf die Anzahl von Feuerstellen im Betrieb im FAC (1), nc die Anzahl von Hohlwandheizungen (6) pro Kammer (2) des FAC (1), und Qfc der genormte Durchsatz der Hohlwandheizung n ° c der Feuerstelle n ° f ist.

8.  Verfahren nach einem der Ansprüche 6 und 7, **dadurch gekennzeichnet, dass** die Erfassung von Lecks im Rauchgaskanal (20-20') mindestens einen Schritt der Schätzung des Eindringprozentsatzes (PI) von Umgebungsluft in den Rauchgaskanal durch die folgende Formel enthält:

$$PI = \left( \frac{\Delta Q}{Qsfac} \right) X100$$

9.  Verfahren nach Anspruch 8, **dadurch gekennzeichnet, dass** es außerdem mindestens einen Schritt des Vergleichs des geschätzten Eindringdurchsatzes (PI) von Umgebungsluft mit mindestens einer Eindringschwelle (SI), zum Beispiel SI=10%, und die Erzeugung eines Alarms enthält, wenn der geschätzte Eindringdurchsatz (PI) höher als mindestens eine Eindringschwelle (SI) ist, zum Beispiel PI>10%, die für einen Eindringpegel repräsentativ ist, der das Auslösen einer Aktion der Kontrolle, Wartung oder Reparatur des Rauchgaskanals (20-20') erforderlich macht.

10. Verfahren nach einem der Ansprüche 8 und 9, **dadurch gekennzeichnet, dass** es außerdem mindestens einen Schritt der zeitlichen Verfolgung der Entwicklung des Gradienten des Eindringprozentsatzes (PI) von Umgebungsluft, zumindest periodisch gemessen, und die Erzeugung eines Alarms enthält, der einen Leckgradienten anzeigt, wenn der Eindringprozentsatzgradient positiv ist und über einen Überwachungszeitraum zunimmt, während dessen nacheinander berechnete Werte von PI historisiert und miteinander verglichen werden.

11. Verfahren nach einem der Ansprüche 6 bis 10, **dadurch gekennzeichnet, dass** es außerdem mindestens einen Schritt der Schätzung des systematischen Messfehlers der Lecks während eines Zeitraums mindestens eines Brennzyklus enthält, indem als Bezug die Durchsatzwerte beim Start oder beim Neustart des FAC (1) im Fall einer neuen Anlage bzw. einer renovierten Anlage genommen wird, deren Lecks optimal minimiert sind.

12. Verfahren nach einem der Ansprüche 1 bis 11, **dadurch gekennzeichnet, dass** es außerdem darin besteht, von einem beliebigen zum anderen mindestens eines Systems (44) zur Steuerung und Regelung des FAC (1) und mindestens eines Steuer- und Kontrollsystems (47) des CTF (23) ausgetauschte und/ oder übertragene Informationen zu verwenden, die sich auf den Durchsatz und/ oder die Temperatur und/ oder die Enthalpie der Brennrauchgase am Eingang des CTF (23) und/ oder am Ausgang des FAC (1) beziehen, insbesondere im Bereich jeder Absaugrampe (11) oder jedes Absaugstutzens (11a) des FAC (1), um die Überwachung des Zustands des Rauchgaskanals (20- 20'), das mögliche Aussenden mindestens eines Erfassungssignals eines Lecks und/ oder eines Brands, und/ oder mindestens eines Alarms, durch mindestens eines der Steuersysteme (44, 47), und/ oder mindestens eines Steuerbefehls zum Schutz des FAC (1) und/ oder des CTF (23), und/ oder zur Sicherung seines Betriebs zu gewährleisten.

**Claims**

1.  Method of monitoring the condition of an exhaust fume main (20- 20') connecting each exhaust manifold (11) of a baking furnace (BF) (1) for carbonaceous blocks (5), intended for electrometallurgy, such as carbon anodes or cathodes intended for the electrolytic production of aluminium, to a fume treatment centre (FTC) (23), intended for scrubbing the baking fumes originating from the BF (1), which is a baking furnace of the type known as a "ring" furnace preferably "open top", or "closed" from which the baking fumes are extracted by at least one exhaust manifold (11) of the BF (1) and collected in said fume main (20- 20') conveying the fumes to the FTC (23), the method being **characterized in that** it comprises at least one step of detecting an outbreak of fire in said fume main (20- 20'), said step of detecting an outbreak of fire in said fume main (20- 20') comprises at least one step of measuring, preferably continuously, the flow rates and temperatures of the fumes at each exhaust manifold (11) of the BF (1) and at the intake of the FTC (23), and calculation of the enthalpy E1 at the end of said fume main (20- 20') connected to the outlet of the BF (1) and the enthalpy E2 at the end of said fume main connected to the intake of the FTC (23), as well as determining the heat losses P between the outlet of the BF (1) and the intake of the FTC (23), and determining the appearance of an outbreak of fire in said fume main (20- 20') if an energy input X, such as: X = E2- E1 + P, is positive.

2. Method according to claim 1, **characterized in that** said heat losses P are at least the sum of line losses PL, which are a function in particular of the temperature and the flow rate of the fumes and the ambient temperature, preferably also continuously measured, and of an estimate of losses by infiltration of ambient air PA into said fume main (20- 20'), such that X=E2- E1 +PL+PA.

3. Method according to one of claims 1 and 2, **characterized in that** it comprises moreover a step consisting of considering that the enthalpy E1 of the baking fumes at the outlet of the BF (1) is equal to the sum of the enthalpies of the baking fumes extracted from the exhaust manifolds (11) in operation on the BF (1).

4. Method according to any one of claims 1 to 3, **characterized in that** it comprises moreover at least one step of emitting at least one alarm, in order to initiate at least one activity of inspecting and/or protecting said fume main (20- 20'), if the energy input X relating to a possible fire in the fume main is greater than at least one positive threshold, making it possible to avoid inaccurate measurements and interference linked to transitory phases of operation of the BF (1) and/or the FTC (23) .

5. Method according to any one of claims 1 to 4, **characterized in that** it comprises moreover at least one step of monitoring over time of the progress of the gradient of the energy input (X), measured at least periodically, and generating a fire alarm indicating a critical energy input gradient if the energy input gradient is positive and increasing over a period of monitoring during which the successively-calculated values of X are chronologically stored and mutually compared.

6. Method according to any one of claims 1 to 5, **characterized in that** it comprises moreover at least one step of detecting leakage consisting of unwanted intakes of ambient air into said fume main (20- 20'), said leak detection comprising at least one step of comparison of the measured fume flow rates, on the one hand, at the outlet of the BF (1), and on the other hand, at the intake of the FTC (23), and deducing any flow of air $\Delta Q$ entering by infiltration into the fume main (20- 20') by calculating the difference between the measured flow rates, such that: $\Delta Q = Q_{ectf}- Q_{sfac}$, where $Q_{sfac}$ is the standardized flow rate of the fumes at the outlet of the BF (1) and $Q_{ectf}$ is the standardized flow rate of the fumes at the intake of the FTC (23) .

7. Method according to claim 6, **characterized in that** it comprises at least one step of measuring $O_{sfac}$ consisting of adding the standardized flow rates of the fumes measured in the exhaust pipes (11 a) of the exhaust manifolds (11) of all the fires of the BF (1) that communicate with heating flue walls (6) of the chambers (2) of the BF (1), such that:

$$Qsfac = \sum_{f=1}^{f=nf} \sum_{c=1}^{c=nc} (Qf1...Qfc)\,,$$ where nf is the number of fires in operation in the BF (1), nc is the number of heating flue walls (6) per chamber (2) of the BF (1), and Qfc is the standardized flow rate of heating flue wall n ° c of fire n ° f.

8. Method according to any one of claims 6 and 7, **characterized in that** the detection of leaks on said fume main (20-20') comprises at least one step of estimating the percentage infiltration (PI) of ambient air in said fume main by the formula:

$$PI = \left( \frac{\Delta Q}{Qsfac} \right) X100\,.$$

9. Method according to claim 8, **characterized in that** it comprises moreover, at least one step of comparing said estimated percentage infiltration (PI) of ambient air with at least one threshold of infiltration (SI), and generating an alarm when the estimated percentage of infiltration (PI) is greater than at least one threshold of infiltration (SI) representing a level of infiltration at which it would be necessary to initiate an activity of inspection, maintenance or repair of the fume main (20- 20') .

10. Method according to any one of claims 8 and 9, **characterized in that** it comprises moreover at least one step of monitoring over time of the progress of the gradient of the percentage infiltration (PI) of ambient air, measured at least periodically, and generating an alarm indicating a leak gradient if the percentage infiltration gradient is positive and increasing over a period of monitoring during which successively-calculated PI values are chronologically stored and mutually compared.

11. Method according to any one of claims 6 to 10, **characterized in that** it comprises moreover at least one step of estimating the systematic leak measurement error during a period of at least one bake cycle, taking as reference the flow-rate values on start-up or restarting of the BF (1) in the case respectively of a new installation or a renovated installation, on which leaks are optimally minimized.

12. Method according to any one of claims 1 to 11, **characterized in that** it consists, in addition, of using information exchanged and/or transmitted from any one to another of at least one control and regulation system 44 of the BF (1) and at least one monitoring and control system (47) of the FTC (23), relative to the flow rate and/or the temperature and/or the enthalpy of the baking fumes, at the intake of the FTC (23) and/or at the outlet of the BF (1), in particular at the level of each exhaust manifold (11) or each exhaust pipe (11 a) of the BF (1), in order to provide monitoring of the condition of said fume main (20-20'), the optional emission of at least one leak detection and/or fire outbreak signal, and/or at least one alarm, by at least one of said control systems (44, 47), and/or at least one command for protection of the BF (1) and/or the FTC (23), and/or making their operation safe.

FIG. 1

Sens de rotation des feux

A - Zone de préchauffage

B - Zone de chauffage

C - Zone de refroidissement naturel

D - Zone de refroidissement forcé

E - Zone de travail

Direction des feux

CTF

EP 2 183 536 B1

FIG. 2

FIG. 3

$\sum (Qnf,1...Qnf,nc)$, TASP ou Tnf,1...Tnf,nc

$\sum (Q1,1...Q1,nc)$, TASP ouT1,1...T1,nc

$Q_{sfac}$

$Q_{ectf}$

EP 2 183 536 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4859175 A
- WO 9119147 A
- US 6339729 B
- US 6436335 B
- CA 2550880
- FR 2887782 A
- EP 0252856 A